# EUROPEAN PATENT SPECIFICATION

(11) **EP 3 783 050 B1**
(45) Date of publication and mention of the grant of the patent: **14.09.2022**
(21) Application number: 20191673.1
(22) Date of filing: 19.08.2020
(51) Int. Cl.: C08J 3/12

(54) **PROCESS FOR THE PRODUCTION OF TPE-O**
VERFAHREN ZUR HERSTELLUHNG EINES TPE-O
PROCÉDÉ POUR PRODUIRE UNE RÉSINE TPE-O

(30) Priority: 22.08.2019 IT 201900014919
(43) Date of publication of application: 24.02.2021
(73) Proprietor: SERMAG S.r.l., 20124 Milano (IT)
(72) Inventor: ROSMINO, Andrea, I-16146 Genova (IT)
(74) Representative: Gerbino, Angelo

(56) References cited:
- EP-A1- 0 931 814
- WO-A1-2017/082999
- IT-A1- MI20 100 988
- US-A- 4 420 524

## Description

This invention refers to the sector of thermoplastic elastomers (TPE), in particular of olefinic nature (TPE-O).

As is known, thermoplastic elastomers combine the workability and recyclability properties of thermoplastic materials with many of the physical properties of thermosetting rubbers, such as elasticity, low permanent compression deformation and high flexibility.

In particular, TPEs may be described as two-phase materials, consisting of a rubbery elastomeric component and a rigid thermoplastic component. The elastomeric phase brings about properties similar to those of rubber, such as elasticity, softness, flexibility, low permanent compression deformation and low service temperature, while the thermoplastic phase has properties similar to those of a usual thermoplastic polymer, such as hardness, workability, recyclability and high service temperature. US4420524 discloses a bitumen waterproofing membrane.

An object of this invention is to provide TPE-Os which are improved in comparison with those of the prior art.

According to the invention, this object is achieved by a process for the production of an olefinic thermoplastic elastomer, comprising the steps of:
- shredding atactic polypropylene in a shredder without grate, so as to obtain small blocks with a mass not exceeding 1 kg,
- grinding polyethylene in a mill, so as to obtain flakes not exceeding 16 mm in size,
- feeding into a further granulator mill equipped with a 16 mm grid 100 parts by weight of said atactic polypropylene blocks and 220 to 300 parts by weight of said polyethylene flakes, so as to obtain a mixture of granules of size not greater than 16 mm,
- feeding said mixture at the inlet end of an extruder, wherein 35 to 45 parts by weight of a copolymer of isotactic polypropylene and polyethylene are subsequently added, and
- extruding said thermoplastic elastomer through an exit die of the extruder.

An advantage offered by the process of the invention is that it allows thermoplastic materials of little commercial interest to be adequately exploited, in particular atactic PP (possibly containing small copolymerized quantities of other monomers), which is typically obtained as a by-product from the production of isotactic PP and is rarely used, and then usually only as an additive, due to its difficult workability, mainly due to properties very different from those of isotactic PP. Atactic PP is in fact usually soft, rubbery, resilient with a flexural modulus with a minimum value reaching 25 MPa, slightly sticky and often highly viscous with Brookfield viscosity values normally between 500,000 and 1,500,000 cps, and not resistant to high temperatures with softening point values of around 110°C, that is, properties that had previously precluded its massive use in conventional production cycles.

The polyethylene fed at the inlet end of the extruder is constituted by pre-and/or postconsumer recycled LDPE/LLDPE, for example obtained from packaging film. Preferably, the isotactic polypropylene and polyethylene copolymer is added about halfway along the length of the extruder, and said copolymer consists of about 85% by weight of isotactic polypropylene and about 15% by weight of polyethylene.

In embodiments of the invention, 30 to 60 parts by weight of HDPE, preferably in the form of 16 mm flakes coming from the separate collection of bottles, and/or 5 to 10 parts by weight of black dye are also subsequently added into the extruder-preferably about halfway along its length. Typically, the parts by weight of PE (LDPE/LLDPE + possibly HDPE) added together in the extruder are collectively between 250 and 300.

Preferably, the atactic PP shredder is of the slow-rotating, two-shaft type, while the polyethylene grinding mill is of the single-shaft type.

Advantageously, a two-screw extruder is used having, for example, a ratio between length and external diameter of the screws between 40 and 45, in particular 43, which is operated with a rotation speed of the screws between 110 and 150 rpm.

A thermoplastic elastomer is obtainable by carrying out the process described above, and, in particular, usable for the production of bitumen-based waterproofing membranes.

The thermoplastic elastomer obtainable by the process of the invention typically consists of granules of a size between 3 and 5 mm, not subject to packing and which may be dosed in a similar way to any type of conventionally sold compound. With respect to atactic polypropylene which is normally offered on the market in 25 kg blocks, the thermoplastic elastomer obtainable by the process of the invention has excellent thermal stability and is therefore easy to store in bags on a pallet, even in outdoor warehouses.

A waterproofing membrane is formed from 75 to 85 parts by weight of bitumen and 25 to 15 parts by weight of the thermoplastic elastomer described above, preferably from 80 parts by weight of bitumen and 20 parts by weight of thermoplastic elastomer.

It has been found that in these bituminous membranes, the modification of the bitumen deriving from the use of the thermoplastic elastomer obtainable by the process of the invention allows cold flexibility (according to the UNI EN 1109 standard), resistance to penetration (according to the ASTM D5 standard) and ring and ball (according to the ASTM D36 standard) values to be obtained which are far superior to those that would have been obtained by modifying the same bitumen by adding the components of the thermoplastic elastomer obtainable by the process of the invention separately in the same percentages.

Specifically, for the modified bitumens in a ratio of 80% bitumen/20% thermoplastic elastomer obtainable by the process of the invention, average ring and ball values between 125 and 135°C, cold bending values greater than -20°C and penetration values between 70 and 100 dmm (tenths of a mm) have been recorded, i.e. optimal values for the production of particularly efficient bituminous membranes.

It should also be noted that the use of by-products and recycled products in the thermoplastic elastomer obtainable by the process of the invention allows the cost of the waterproofing membranes using it to be reduced considerably.

The latter membranes have the following properties, in particular in comparison with those belonging to the prior art:
- improved sound absorption;
- retention of properties even at extreme temperatures (negative and positive);
- fatigue resistance;
- chemical resistance;
- abrasion resistance;
- resistance to weather and ozone;
- easy workability;
- recyclability;
- greater flexibility at low service temperatures;
- greater stiffness at high service temperatures;
- wider range of elastoplasticity (i.e. greater range of service temperatures );
- better correlation between viscosity and temperature with reduced thermal susceptibility;
- greater resistance to loads and fatigue;
- higher elastic recovery;
- greater resistance to aging (i.e., longer service life).

Further advantages and features of this invention will become evident from the following embodiments provided by way of non-limiting examples.

### EXAMPLE 1

6,500 kg of atactic PP with Brookfield viscosity between 500,000 and 1,500,000 cps at 190°C, flexural modulus between 25 and 100 MPa, softening point between 110 and 140°C supplied in the form of blocks of 25 kg, are loaded into a slow-rotating two-shaft shredder without discharge grate until they are shredded into small blocks with a mass not exceeding 1 kg.

Separately from the atactic PP, 18,000 kg of LDPE/LLDPE from recycled packaging film having a density of 905 kg/m³ and MFI equal to 1.0 (190°C, 2.16 kg) are washed, ground in a single-shaft mill until flakes not larger than 16 mm are obtained and dried.

Successively, the atactic polypropylene blocks and the previously obtained polyethylene flakes are conveyed to a further granulator mill equipped with a 16 mm grid, so as to obtain a substantially uniform mixture of granules not exceeding 16 mm in size.

This mixture is fed into the inlet end of an extruder through a forced feeding device.

The extruder used is a co-rotating two-screw extruder with a cylinder diameter equal to 110 mm and a ratio between length and outer diameter of the screws equal to 43. The rotation speed of the screws is between 110 and 150 rpm.

By means of gravimetric dosers, about halfway along the length of the extruder, 2,500 kg of granules of a random isotactic polypropylene and polyethylene copolymer are added, composed of 85% by weight of isotactic polypropylene and 15% by weight of polyethylene (Vistamaxx 6202 produced by Exxon) with a density of 860 kg/m³, and MFI of 9.1 (230°C, 2.16 kg), as well as 450 kg of black dye granules.

27,450 kg of thermoplastic elastomer are extruded from an exit die of the extruder, the granules of which are then conveyed by screw to a mixer silo to homogenize the product obtained and from there, again by screw feeder, to an automatic bagging machine for packaging in 25 kg bags.

### EXAMPLE 2

The only substantial difference with respect to EXAMPLE 1 consists in that, at about half the length of the two-screw extruder, 2,000 kg of 16 mm flakes of HDPE coming from the separate collection of bottles and having a density of 920 kg/m³ and MFI on average equal to 0.8 (190°C, 5 kg) are also added, reducing at the same time to 16,000 kg the quantity of LDPE/LLDPE fed to the inlet end of the two-screw extruder.

Naturally, without prejudice to the principle of the invention, the details of implementation and the embodiments may vary widely relative to that which has been described purely by way of example, without thereby departing from the scope of the invention as defined in the accompanying claims. For example, in addition to the materials described above, all the additives conventionally used in the processing of plastic and elastomeric materials, such as stabilizers, dyes, flame retardants, plasticizers, fillers, etc., may be fed into the mills and/or the extruder used in the process of the invention.

## Claims

1. Process for the production of an olefinic thermoplastic elastomer, comprising the steps of:
- shredding in a shredder without grate atactic polypropylene, so that small blocks of mass not exceeding 1 kg are obtained,
- grinding in a mill polyethylene, which is constituted by pre- and post-consumer recycled LDPE/LLDPE, so that flakes of a size not exceeding 16 mm are obtained,
- feeding into a further granulator mill equipped with a 16 mm grid 100 parts by weight of said small blocks of atactic polypropylene and 220 to 300 parts by weight of said flakes of polyethylene, so that a mixture of granules of size not greater than 16 mm is obtained,
- feeding said mixture at the inlet end of an extruder, in which 35 to 45 parts by weight of a copolymer of isotactic polypropylene and polyethylene are subsequently added, and
- extruding said thermoplastic elastomer through an exit die of the extruder.

2. Process according to claim 1, wherein said polyethylene is obtained from packaging films.

3. Process according to any one of the preceding claims, in which 30 to 60 parts by weight of HDPE, preferably in the form of flakes deriving from separate collection of bottles, and/or 5 to 10 parts by weight of black dye are subsequently added to said extruder.

4. Process according to any one of the preceding claims, in which the copolymer of isotactic polypropylene and polyethylene, the HDPE, if present, and the black dye, if present, are added at half the length of the extruder.

5. Process according to any one of the preceding claims, in which said copolymer consists of 85% by weight of isotactic polypropylene and 15% by weight of polyethylene.

6. Process according to any one of the preceding claims, wherein said extruder is a two-screw extruder and is operated at a speed of rotation of the screws comprised between 110 and 150 rpm.

7. Process according to claim 6, wherein said twin-screw extruder has a ratio between length and external diameter of the screws between 40 and 45, in particular 43.

8. Process according to any one of the preceding claims, wherein said thermoplastic elastomer is obtained in the form of granules, preferably having a size comprised between 3 and 5 mm.

## Patentansprüche

1. Verfahren zur Herstellung eines olefinischen thermoplastischen Elastomers, aufweisend die folgenden Schritte:
- Zerkleinern in einem Zerkleinerer ohne ataktischen Polypropylenrost, so dass kleine Blöcke von einer 1 kg nicht übersteigenden Masse erhalten werden,
- Mahlen von Polyethylen in einer Mühle, wobei das Polyethylen aus rezykliertem Pre- und Post-Consumer-LDPE/LLDPE gebildet ist, so dass Flocken in einer 16 mm nicht übersteigenden Größe erhalten werden,
- Einspeisen von 100 Gewichtsteilen der kleinen Blöcke aus ataktischem Polypropylen und 220 bis 300 Gewichtsteilen der Flocken aus Polyethylen in eine weitere Granuliermühle, die mit einem 16-mm-Gitter ausgestattet ist, so dass eine Mischung aus Körnchen von einer 16 mm nicht übersteigenden Größe erhalten wird,
- Einspeisen der Mischung an dem Einlassende eines Extruders, in welchem 35 bis 45 Gewichtsteile eines Kopolymers aus isotaktischem Polypropylen und Poyethylen nacheinander hinzugefügt werden, und
- Extrudieren des thermoplastischen Elastomers durch eine Austrittsdüse des Extruders.

2. Verfahren nach Anspruch 1, wobei das Polyethylen aus Verpackungsfolien gewonnen ist.

3. Verfahren nach einem der vorangehenden Ansprüche, bei dem 30 bis 60 Gewichtsanteile HDPE, bevorzugt in Form von Flocken, die aus getrennten Flaschensammlungen stammen, und/oder 5 bis 10 Gewichtsanteile schwarzer Farbe nacheinander dem Extruder hinzugefügt werden.

4. Verfahren nach einem der vorangehenden Ansprüche, bei dem das Kopolymer aus isotaktischem Polypropylen und Polyethylen, das HDPE, falls vorhanden, und die schwarze Farbe, falls vorhanden, auf halber Länge des Extruders zugegeben werden.

5. Verfahren nach einem der vorangehenden Ansprüche, bei dem das Kopolymer aus 85 Gewichtsprozent isotaktischem Polypropylen und 15 Gewichtsprozent Polyethylen besteht.

6. Verfahren nach einem der vorangehenden Ansprüche, wobei der Extruder ein Zweischneckenextruder ist und bei einer zwischen 110 und 150 rpm liegenden Drehgeschwindigkeit der Schnecken betrieben wird.

7. Verfahren nach Anspruch 6, wobei der Zwillingsschneckenextruder ein Verhältnis zwischen Länge und Außendurchmesser der Schnecken zwischen 40 und 45, insbesondere 43 hat.

8. Verfahren nach einem der vorangehenden Ansprüche, wobei das thermoplastische Elastomer in Form von Körnchen erhalten wird, die bevorzugt eine Größe zwischen 3 und 5 mm aufweisen.

## Revendications

1. Procédé de production d'un élastomère thermoplastique oléfinique, comprenant les étapes consistant à :
- déchiqueter, dans une déchiqueteuse sans grillage, un polypropylène atactique, de façon que des petits blocs de masse ne dépassant pas 1 kg soient obtenus,
- broyer, dans un broyeur, un polyéthylène qui est constitué de LDPE/LLDPE recyclés pré- et post-consommation, de façon que des lamelles d'une taille de dépassant pas 16 mm soient obtenues,
- introduire, dans un autre broyeur granulateur équipé d'une grille de 16 mm, 100 parties en poids desdits petits blocs de polypropylène atactique et 220 à 300 parties en poids desdites lamelles de polyéthylène, de façon qu'un mélange de granulés d'une taille non supérieure à 16 mm soit obtenu,
- introduire ledit mélange à l'extrémité d'entrée d'une extrudeuse, dans laquelle 35 à 45 parties en poids d'un copolymère de polypropylène isotactique et de polyéthylène sont ensuite ajoutées, et
- extruder ledit élastomère thermoplastique à travers une filière de sortie de l'extrudeuse.

2. Procédé selon la revendication 1, dans lequel ledit polyéthylène est obtenu à partir de films d'emballage.

3. Procédé selon l'une quelconque des revendications précédentes, dans lequel 30 à 60 parties en poids de HDPE, de préférence sous forme de lamelles issues d'une collecte séparée de bouteilles, et/ou 5 à 10 parties en poids d'un colorant noir sont ensuite ajouté à ladite extrudeuse.

4. Procédé selon l'une quelconque des revendications précédentes, dans lequel le copolymère de polypropylène isotactique et de polyéthylène, le HDPE, s'il est présent, et le colorant noir, s'il est présent, sont ajoutés à la moitié de la longueur de l'extrudeuse.

5. Procédé selon l'une quelconque des revendications précédentes, dans lequel ledit copolymère consiste en 85 % en poids d'un polypropylène isotactique et 15 % en poids d'un polyéthylène.

6. Procédé selon l'une quelconque des revendications précédentes, dans lequel ladite extrudeuse est une extrudeuse à double vis et fonctionne à une vitesse de rotation des vis comprise entre 110 et 150 tr/min.

7. Procédé selon la revendication 6, dans lequel ladite extrudeuse à double vis présente un rapport entre la longueur et le diamètre externe des vis entre 40 et 45, en particulier de 43.

8. Procédé selon l'une quelconque des revendications précédentes, dans lequel ledit élastomère thermoplastique est obtenu sous forme de granulés, de préférence ayant une taille comprise entre 3 et 5 mm.
